# EUROPEAN PATENT APPLICATION

(11) **EP 4 497 738 A1**
(43) Date of publication of application: **29.01.2025**
(21) Application number: 23774729.0
(22) Date of filing: 16.03.2023
(51) Int. Cl.: C04B 35/38, H01F 1/34

(54) **MNZN-BASED FERRITE**

(30) Priority: 23.03.2022 JP 2022047039
(71) Applicant: Toda Kogyo Corp., Hiroshima-shi, Hiroshima 732-0828 (JP)
(72) Inventor: KOUJIMA Jun, Otake-shi, Hiroshima 739-0652 (JP); Shin Bum Gyun, Wonju-Si, Gangwon-Do 26362 (KR); Lee Jang Wook, Wonju-Si, Gangwon-Do 26362 (KR)
(74) Representative: Cabinet Becker et Associés
(86) International application number: PCT/JP2023/010259
(87) International publication number: WO 2023/182133

(57) **Abstract**

MnZn-based ferrite according to the present invention includes, as major components, 50 mol % to 53 mol % Fe₂O₃, 8 mol % to 10 mol % ZnO, and 37 mol % to 42 mol % MnO on an oxide basis, the MnZn-based ferrite containing, as minor components, less than or equal to 120 ppm SiO₂, 100 ppm to 500 ppm Nb₂O₅, 0 ppm to 200 ppm ZrO₂, 2000 ppm to 4000 ppm Co₃O₄, and 0 ppm to 1500 ppm SnO₂ on an oxide basis.

## Description

### TECHNICAL FIELD

The present invention relates to MnZn-based ferrite used as materials for transformers such as switching power supplies and specifically relates to MnZn-based ferrite with low temperature dependence of core loss.

### BACKGROUND ART

MnZn-based ferrite has the properties that the core loss is low and the saturated magnetic flux density is also relatively high, and the MnZn-based ferrite is thus widely used as materials for transformers such as switching power supplies. In general, MnZn-based ferrite includes: Fe₂O₃, ZnO, and Mn as major components; and various minor components such as CaO, SiO₂, and Nb₂O₅ added to the major components. Such MnZn-based ferrite is required to have low core loss over a wide temperature range, as well as a high saturated magnetic flux density, when operation environments of power supplies and the like are taken into account. Therefore, various types of MnZn-based ferrite with low temperature dependence of core loss are proposed.

As an example of conventional MnZn-based ferrite, for example, Patent Literature 1 discloses MnZn-based ferrite including, as major components, 53.2 to 54.5 mol % ferric oxide on a Fe₂O₃ basis and 7.5 to 11.5 mol % zinc oxide on a ZnO basis and including, as the remainder, manganese oxide (MnO). Specifically, with respect to the major components, 2000 to 4500 ppm cobalt oxide on a Co₃O₄ basis, 60 to 140 ppm silicon oxide on a SiO₂ basis, 300 to 700 ppm calcium oxide on a CaO basis, and 100 to 350 ppm niobium oxide on a Nb₂O₅ basis are contained. Thus, MnZn-based ferrite with reduced core loss over a wide temperature range can be obtained.

Further, Patent Literature 2 discloses MnZn-based ferrite containing Fe₂O₃, ZnO, and MnO as major components, wherein the MnZn-based ferrite contains, as minor components, with respect to the total of, that is, 100 parts by mass of, the major components on an oxide basis, greater than 0.001 parts by mass and less than or equal to 0.015 parts by mass of Si on a SiO₂ basis, greater than 0.1 parts by mass and less than or equal to 0.35 parts by mass of Ca on a CaCO₃ basis, less than or equal to 0.4 parts by mass (not including 0) of Co on a Co₃O₄ basis, less than or equal to 0.1 parts by mass (including 0) of Ta on a Ta₂O₅ basis, less than or equal to 0.1 parts by mass (including 0) of Zr on a ZrO₂ basis, and less than or equal to 0.05 parts by mass (including 0) of Nb on a Nb₂O₅ basis.

### CITATION LIST

### PATENT LITERATURE

[Patent Literature 1] Japanese Laid-Open Patent Publication No. 2002-231520
[Patent Literature 2] International Publication WO 2017/164350

### SUMMARY OF INVENTION

### TECHNICAL PROBLEM

In the MnZn-based ferrite described in Patent Literature 1 and Patent Literature 2, it may be possible to relatively reduce the core loss by setting the content of each component of the MnZn-based ferrite to a predetermined range. However, to reduce the size and increase the efficiency of transformers, a further reduction in core loss over a wide temperature range is required, and therefore, the content of each component of the MnZn-based ferrite which contributes to the reduction in core loss has to be set to a further preferred range.

In view of the foregoing, it is an object of the present invention to provide MnZn-based ferrite with reduced core loss over a wide temperature range of 25°C to 120°C.

### SOLUTION TO PROBLEM

To achieve the object, in the present invention, the content of each component of the MnZn-based ferrite is set to the following predetermined range.

Specifically, the MnZn-based ferrite according to the present invention includes, as major components, 50 mol % to 53 mol % Fe₂O₃, 8 mol % to 10 mol % ZnO, and 37 mol % to 42 mol % MnO on an oxide basis, wherein the MnZn-based ferrite includes as minor components, 100 ppm to 300 ppm CaO, less than or equal to 120 ppm SiO₂, 100 ppm to 500 ppm Nb₂O₅, 0 ppm to 200 ppm ZrO₂, 2000 ppm to 4000 ppm Co₃O₄, and 0 ppm to 1500 ppm SnO₂ on an oxide basis.

With the MnZn-based ferrite according to the present invention, setting the content of each component of the MnZn-based ferrite to the predetermined range described above enables the core loss to be reduced. In particular, the MnZn-based ferrite according to the present invention contains, as the major components, 50 mol % to 53 mol % Fe₂O₃, 8 mol % to 10 mol % ZnO, and 37 mol % to 42 mol % MnO on an oxide basis, and therefore, the effect of reducing the core loss can be obtained while a high saturated magnetic flux density is obtained. Further, the MnZn-based ferrite according to the present invention contains, as the minor components, CaO, SiO₂, Nb₂O₅, ZrO₂, Co₃O₄, and SnO₂ in their respective ranges described above, and therefore, the core loss can be reduced over the wide temperature range. In the content ranges of the minor components, when the contents of CaO and SiO₂ exceed their respective ranges described above, abnormal grain growth of a crystal is easily caused at the time of sintering, and therefore, the core loss may increase, whereas when the content of CaO is less than the range described above, a grain boundary having high electrical resistance cannot be satisfactorily formed, and therefore, the core loss may increase. When the contents of Co₃O₄ and Nb₂O₅ are less than their respective ranges described above, the effect of reducing the core loss may be reduced, whereas when the contents of Co₃O₄ and Nb₂O₅ exceed their respective ranges described above, the core loss may increase. Further, when the contents of ZrO₂ and SnO₂ exceed their respective ranges, the core loss may increase. these properties in combination enables the MnZn-based ferrite according to the present invention to have reduced core loss over a wide temperature range of 25°C to 120°C.

Further, the MnZn-based ferrite according to the present invention preferably contains, as the minor components, 150 ppm to 250 ppm CaO, 50 ppm to 150 ppm ZrO₂, 2000 ppm to 3000 ppm Co₃O₄, and 500 ppm to 1000 ppm SnO₂ on an oxide basis.

Setting the content of each minor component of the MnZn-based ferrite to the further preferred range as described above enables the core loss to be effectively reduced over a wide temperature range.

### ADVANTAGEOUS EFFECTS OF INVENTION

The MnZn-based ferrite according to the present invention has reduced core loss over a wide temperature range of 25°C to 120°C.

### DESCRIPTION OF EMBODIMENTS

An aspect for implementing the present invention will be described below. The description of a preferable embodiment below is substantially a mere example and does not intend to limit the present invention, the application method thereof, or the application thereof.

First of all, MnZn-based ferrite according to an embodiment of the present invention will be described.

The MnZn-based ferrite according to the present embodiment contains, as major components, 50 mol % to 53 mol % Fe₂O₃, 8 mol % to 10 mol % ZnO, and 37 mol % to 42 mol % MnO on an oxide basis. When the contents of Fe₂O₃, ZnO, and MnO fall out of their respective content ranges, the core loss may increase.

Further, the MnZn-based ferrite according to the present embodiment contains, as minor components, 100 ppm to 300 ppm CaO, less than or equal to 120 ppm SiO₂, 100 ppm to 500 ppm Nb₂O₅, 0 ppm to 200 ppm ZrO₂, 2000 ppm to 4000 ppm Co₃O₄, and 0 ppm to 1500 ppm SnO₂ on an oxide basis.

In the content ranges of the minor components, when CaO is less than 100 ppm, the core loss may increase, whereas when CaO exceeds 300 ppm, abnormal grain growth of a crystal easily occurs at the time of sintering, and as a result, the core loss may increase. Preferably, the content of CaO falls within the range of from 185 ppm to 280 ppm, and more preferably, the content of CaO falls within the range of from 220 ppm to 280 ppm.

In the content ranges of the minor components, when SiO₂ exceeds 120 ppm, abnormal grain growth of a crystal easily occurs at the time of sintering, and as a result, the core loss may increase. More preferably, the content of SiO₂ is less than or equal to 117 ppm.

In the content ranges of the minor components, when Nb₂O₅ is less than 100 ppm, the effect of reducing the core loss may be reduced, whereas when Nb₂O₅ exceeds 500 ppm, abnormal grain growth of a crystal easily occurs at the time of sintering, and the core loss may increase. Preferably, the content of Nb₂O₅ falls within the range of from 300 ppm to 400 ppm.

In the content ranges of the minor components, when Co₃O₄ is less than 2000 ppm, the temperature dependence of the core loss increases, and the effect of reducing the core loss may be reduced, whereas when Co₃O₄ exceeds 4000 ppm, the core loss may increase. Preferably, the content of Co₃O₄ falls within the range of from 2650 ppm to 3100 ppm.

In the content ranges of the minor components, when SnO₂ and ZrO₂ fall out of their respective content ranges, the core loss may increase. Preferably, the content of SnO₂ falls within the range of from 0 ppm to 1000 ppm, and the content of ZrO₂ falls within the range of from 0 ppm to 110 ppm.

Further, in the present embodiment, as the minor components, 150 ppm to 250 ppm CaO, 50 ppm to 150 ppm ZrO₂, 2000 ppm to 3000 ppm Co₃O₄, and 500 ppm to 1000 ppm SnO₂ on an oxide basis are preferably included. In this case, MnZn-based ferrite with more effectively reduced core loss over a wide temperature range of 25°C to 120°C can be obtained. More preferably, the content of CaO is within the range of from 185 ppm to 215 ppm, the content of ZrO₂ is within the range of from 90 ppm to 110 ppm, the content of Co₃O₄ is within the range of from 2650 ppm to 2750 ppm, and the content of SnO₂ is within the range of from 900 ppm to 1000 ppm.

Further, in the present embodiment, the ratio (Nb₂O₅/CaO) of Nb₂O₅ and CaO as the minor components preferably falls within the range of from 1.0 to 2.5. Setting the ratio of Nb₂O₅ and CaO within this range enables the temperature dependence of the core loss to be reduced.

Further, the present embodiment preferably contains substantially none of TiO₂, V₂O₅, MoOs, and Bi₂O₃ as the minor components.

Next, a preferred method of producing the MnZn-based ferrite according to the embodiment of the present invention will be described.

First of all, raw materials (Fe₂O₃, ZnO, MnO) being the major components in powder form are wet blended, are then calcined at a predetermined temperature within the range of from 800°C to 900°C, and are ground, thereby obtaining a ground product. Then, to the ground product, raw materials (CaO, SiO₂, Nb₂O₅, ZrO₂, Co₃O₄, SnO₂) being the minor components are added at their respective predetermined amounts, thereby obtaining mixture powder.

The mixture powder thus obtained and including the major components and the minor components is first granulated into granules for being molded into a desired shape. For this purpose, for example, a small amount of polyvinyl alcohol as an appropriate binder is added to the mixture powder, and then the mixture powder is spray-dried.

The granules thus obtained are molded into the desired shape, thereby obtaining molded bodies, which are then subjected to a sintering step. The sintering step is performed by being separated into a temperature rising step, a maintaining step, and a cooling step. In particular, in the maintaining step, the granules are maintained at a maintenance temperature of from 1200°C to 1300°C for 2 hours to 5 hours. At this time, the atmospheric oxygen concentration is adjusted within the range of from 1% to 5%, and is adjusted, in the cooling step, by using an equilibrium oxygen partial pressure method. Thus, MnZn-based ferrite molded into the desired shape can be manufactured.

### EXAMPLES

Examples and their comparative examples to which the present invention has been applied will be described below. The examples are merely illustrative of the present invention and should not be construed as limiting the scope of the invention.

### (Production of Samples)

First of all, samples of MnZn-based ferrite of Examples 1 and 2 and Comparative Examples 1 to 4 were produced by the following method. Specifically, for the sample of each of the examples and the comparative examples, raw materials (Fe₂O₃, MnO, ZnO) being the major components were measured to achieve the composition shown in Table 1 and were then wet blended with each other, thereby obtaining a slurry. The slurry obtained by the wet blending was dried, was then calcined at a temperature of from 800°C to 900°C, and was then ground, thereby obtaining calcined powder. Then, to the calcined powder thus obtained, appropriate amounts of CaO, Nb₂O₅, Co₃O₄, ZrO₂, SnO₂, TaO₂ and the like being the minor components were added to achieve the composition shown in Table 1, and a binder was then added to obtain a mixture, and the mixture was then pulverized and spray-dried, thereby obtaining granules. The granules thus obtained were molded into a predetermined shape and were then sintered.

The sintering step was performed by being separated into the temperature rising step, the maintaining step, and the cooling step. The temperature rising step was performed in an atmosphere to rise the temperature from 600°C to 800°C and then in a reducing atmosphere to further rise the temperature to the maintenance temperature. At this time, the rate of temperature rise was 150°C/h-250°C/h. The temperature for the maintaining step was from 1200°C to 1300°C and was maintained for 2 hours to 5 hours. At this time, the atmospheric oxygen concentration was adjusted within the range of from 1% to 5%. In the cooling step, cooling was performed at the rate of cooling of 60°C/h-100°C/h, and the atmospheric oxygen concentration was adjusted by using an equilibrium oxygen partial pressure method. Through the sintering step described above, a sample having an outer diameter of 25 mm, an inner diameter of 17 mm, and a height of 11 mm was obtained.

Then, each sample thus obtained was evaluated in terms of the core loss, the saturated magnetic flux density, and the magnetic permeability. Evaluation methods are as described below.

### (Temperature Dependence of Core Loss)

The core loss was evaluated by using model SY-8217 manufactured by IWATSU ELECTRIC CO., LTD. by winding primary and secondary side windings each three turns around the sample thus obtained for each of the examples and comparative examples, at a frequency of 100 kHz, a maximum magnetic flux density of 200 mT, and a temperature within the range of from 25°C to 140°C.

### (Saturated Magnetic Flux Density)

The saturated magnetic flux density was evaluated by using model SY-8217 manufactured by IWATSU ELECTRIC CO., LTD. by winding primary and secondary side windings each eighteen turns around the sample thus obtained for each of the examples and comparative examples, at 1 kHz, 1194 A/m, 25°C, and 100°C.

### (Magnetic Permeability)

The magnetic permeability was evaluated by using model E4990A manufactured by Keysight Technologies by winding ten turns around the sample thus obtained for each of the examples and comparative examples, at 1 kHz, 1 V, and a room temperature.

Evaluation results of the core loss, the saturated magnetic flux density, and the magnetic permeability of each sample are shown in Table 2.

**[Table 1]**

| | Major Component | | | Minor Component | | | | | | | | | | | |
|---|---|---|---|---|---|---|---|---|---|---|---|---|---|---|---|
| | Fe₂O₃ (mol%) | MnO (mol%) | ZnO (mol%) | NiO (ppm) | CaO (ppm) | SiO₂ (ppm) | Nb₂O₃ (ppm) | Nb₂O₅/CaO | ZrO₂ (ppm) | Co₃O₄ (ppm) | TiO₂ (ppm) | SnO₂ (ppm) | V₂O₅ (ppm) | MoO₃ (ppm) | Bi₂O₃ (ppm) |
| Example 1 | 52.32 | 38.26 | 9.42 | 0 | 250 | <117 | 360 | 1.44 | 0 | 3050 | 0 | 0 | 0 | 0 | 0 |
| Example 2 | 52.03 | 37.98 | 9.99 | 0 | 195 | <110 | 350 | 1.79 | 100 | 2700 | 0 | 950 | 0 | 0 | 0 |
| Comparative Example 1 | 51.82 | 37.17 | 11 | 0 | 400 | <110 | 270 | 0.68 | 0 | 0 | 0 | 0 | 400 | 0 | 0 |
| Comparative Example 2 | 52.22 | 39.76 | 8.02 | 0 | 125 | 0 | 330 | 2.64 | 230 | 800 | 0 | 0 | 0 | 0 | 0 |
| Comparative Example 3 | 51.44 | 37.45 | 11.1 | 0 | 250 | <115 | 380 | 1.52 | 0 | 0 | 5000 | 0 | 0 | 0 | 0 |
| Comparative Example 4 | 54.68 | 35.86 | 7.35 | 2.1 | 240 | 0 | 200 | 0.83 | 0 | 0 | 0 | 0 | 0 | 360 | 260 |

**[Table 2]**

| | Core Loss | | | | | | Magnetic Permeability | Saturated Magnetic Flux Density | |
|---|---|---|---|---|---|---|---|---|---|
| | (mW/cc, 100kHz-200mT) | | | | | | | (mT, 1kHz-1194A/m) | |
| | 25°C | 80°C | 100°C | 110°C | 120°C | 140°C | | 25°C | 100°C |
| Example 1 | 306 | 308 | 344 | 374 | 404 | 471 | 3137 | 517 | 416 |
| Example 2 | 325 | 261 | 305 | 329 | 348 | 410 | 3396 | 531 | 416 |
| Comparative Example 1 | 619 | 440 | 492 | 535 | 591 | 750 | 2400 | 511 | 392 |
| Comparative Example 2 | 655 | 429 | 446 | 465 | 485 | 530 | 2500 | 530 | 420 |
| Comparative Example 3 | 848 | 680 | 721 | 775 | 835 | 973 | 1970 | 490 | 370 |
| Comparative Example 4 | 775 | 417 | 395 | 434 | 506 | 700 | 1965 | 566 | 475 |

Table 2 reveals that the MnZn-based ferrite of each example satisfying the composition range of the present invention has high magnetic permeability and has, in particular, in the temperature range of from 25°C to 120°C, low core loss as well as a high saturated magnetic flux density as compared with the MnZn-based ferrite of each comparative example not satisfying the composition range of the present invention. Therefore, when the MnZn-based ferrite of each example is used, MnZn-based ferrite with reduced core loss in the temperature range of from 25°C to 120°C can be obtained.

Thus, the MnZn-based ferrite according to the present invention containing, as the major components, 50 mol % to 53 mol % Fe₂O₃, 8 mol % to 10 mol % ZnO, and 37 mol % to 42 mol % MnO on an oxide basis, and as the minor components, 100 ppm to 300 ppm CaO, less than or equal to 120 ppm SiO₂, 100 ppm to 500 ppm Nb₂O₅, 0 ppm to 200 ppm ZrO₂, 2000 ppm to 4000 ppm Co₃O₄, and 0 ppm to 1500 ppm SnO₂ on an oxide basis has reduced core loss over a wide temperature range of from 25°C to 120°C and is thus useful.

## Claims

1. MnZn-based ferrite comprising, as major components, 50 mol % to 53 mol % Fe₂O₃, 8 mol % to 10 mol % ZnO, and 37 mol % to 42 mol % MnO on an oxide basis,
the MnZn-based ferrite containing, as minor components, 100 ppm to 300 ppm CaO, less than or equal to 120 ppm SiO₂, 100 ppm to 500 ppm Nb₂O₅, 0 ppm to 200 ppm ZrO₂, 2000 ppm to 4000 ppm Co₃O₄, and 0 ppm to 1500 ppm SnO₂ on an oxide basis.

2. The MnZn-based ferrite of claim 1, wherein
the MnZn-based ferrite contains, as the minor components, 150 ppm to 250 ppm CaO, 50 ppm to 150 ppm ZrO₂, 2000 ppm to 3000 ppm Co₃O₄, and 500 ppm to 1000 ppm SnO₂ on an oxide basis.
